# EUROPÄISCHE PATENTSCHRIFT

(11) **EP 1 953 041 B1**
(45) Veröffentlichungstag und Bekanntmachung des Hinweises auf die Patenterteilung: **09.12.2009**
(21) Anmeldenummer: 07025066.7
(22) Anmeldetag: 22.12.2007
(51) Int. Cl.: B60R 9/04

(54) **Dachreling für Fahrzeuge**
Roof rack for vehicles
Galerie de toit pour véhicules

(30) Priorität: 31.01.2007 DE 102007005651
(43) Veröffentlichungstag der Anmeldung: 06.08.2008
(73) Patentinhaber: JAC Products Deutschland GmbH, 42285 Wuppertal (DE)
(72) Erfinder: Rothstein, Reinhold, 42279 Wuppertal (DE); Steffens, Reiner, 45549 Sprockhövel (DE); Lumpe, Karl-Heinz, 45549 Sprockhövel (DE); Sirrenberg, Stefan, 42279 Wuppertal (DE); Kolodziej, Klaus, 42329 Wuppertal (DE); Höhne, Klaus, 42399 Wuppertal (DE)
(74) Vertreter: Christophersen & Partner

(56) Entgegenhaltungen:
- EP-A- 1 092 591
- EP-A- 1 348 597
- DE-A1- 4 004 829
- DE-A1- 4 223 898

## Beschreibung

Die Erfindung betrifft eine Dachreling für Fahrzeuge gemäß dem Oberbegriff des Patentanspruchs 1.

Eine Dachreling für Fahrzeuge wie z. B. in der DE 40 04 829 C2 beschrieben, besteht üblicherweise aus mindestens einem rohrförmigen Längsholm an jeder Dachseite und mindestens zwei, jeweils einen rohrförmigen Längsholm tragenden Stützfüßen. Zur Montage werden der Längsholm und die Stützfüße zusammengesteckt, und die Stützfüße werden mit Gewindebolzen bestückt, deren überstehende Enden durch Bohrungen im Dachblech hindurch geführt werden. Auf die Gewindebolzen werden von der anderen Seite des Dachblechs her Schraubenmuttern aufgebracht.

Der Herstellungsaufwand dieser bekannten Dachreling ist hoch. Die Längsholme bestehen in der Regel aus Aluminiumrohren, die für sich gefertigt und entsprechend der Dachkontur oftmals in zwei Ebenen gebogen werden. Die Stützfüße werden separat als Kunststoffspritzgussteile oder als Metallgussteile hergestellt und müssen hinsichtlich der Oberfläche den Längsholmen angepasst werden. Dies kann durch Pulverbeschichtung, Verchromen oder Eloxieren geschehen, um für die Stützfüße und Längsholme ein einheitliches Oberflächenbild zu erreichen. Die Oberflächenqualität sowie deren Aussehen prägen das Erscheinungsbild der Dachreling, das bei höherwertigen Fahrzeugen eine große Rolle spielt.

Diese hochdekorativen Oberflächen sind jedoch nicht mit jedem Werkstoff und mit jedem Fertigungsverfahren zu erzielen. Stützfüße, die aus Kunststoff gefertigt werden, lassen sich zwar mit einem großen Gestaltungsspielraum entwerfen, und insbesondere die sichtbare Trennlinien und Übergänge lassen sich vermeiden. Nachteilig ist bei Stützfüßen aus Kunststoff, dass sie sich nur lackieren und verchromen lassen, so dass sie sich an die eloxierte Oberfläche von Längsholmen aus Aluminium nicht anpassen lassen. Häufig werden auch die Fugen zwischen den Stützfüßen und den Längsholen als stilistisch unerwünscht beanstandet.

Dementsprechend wurde gemäß der DE 42 23 898 A1 vorgeschlagen, einen Rohrkörper aus Metall an den Enden abzubiegen und aufzuweiten, um auf diese Weise einen Längsholm mit beidendig einstückig angeformten Stützfüßen zu erhalten. Diese materialeinheitlichen Längsholme mit angeformten Stützfüßen lassen sich ohne sichtbare Trennlinien und Übergänge herstellen, die Oberfläche lässt sich, je nach Werkstoff, in geeigneter Weise durch Pulverbeschichten, Lackieren, Verchromen oder Eloxieren behandeln und diese Dachreling wird daher bezüglich ihres Erscheinungsbilds positiv bewertet.

Ungünstig ist bei beiden vorbeschriebenen Ausführungsformen der Dachrelings, dass diese grundsätzlich nur von der Innenseite des Dachblechs her am Dach festgeschraubt werden können, was nicht immer bei allen Fahrzeugtypen möglich oder erwünscht ist.

Auch die Dachreling gemäß der EP 1 092 591 A2, welche die Merkmale des Oberbegriffs zeigt, lässt sich nur von der Innenseite des Dachblechs her am Dach festschrauben. Bei dieser Dachreling bestehen die zwei Stützfüße aus einem mit dem Dach von innen verschraubbaren Träger, an dem zur Verbindung mit dem Längsholm ein Zapfen ausgebildet ist. Ummantelt ist dieser Träger durch eine aus dem gleichen Material wie die Längsholme bestehende, mittels der Innenhochdruckumformtechnik (IHU) hergestellten Kappe.

Aus der EP 1 348 597 A1 ist eine Fahrzeugdachreling bekannt die dem Oberbegriff des Anspruchs 1 entspricht, bei der die Montage von der Fahrzeugaußenseite des Dachblechs her erfolgt. Die Dachreling besteht aus rohförmigen Längsholmen, die von an deren Enden vorgesehenen Stützfüßen gehalten werden. Die Stützfüße weisen Träger auf, die von fahrzeugaußen her auf dem Dachblech durch Verschrauben befestigt werden können. Um die Schrauben zu verstecken ist eine den Träger übergreifende Abdeckkappe vorgesehen, die an dem Träger festgelegt ist. Die Befestigung der Kappe am Träger erfolgt über in die Kappe eingeklebte Federelemente, die sich in montiertem Zustand an Gegenelementen des Trägers federnd abstützen. Bei dieser Kappe hat sich als nachteilig erwiesen, dass diese nicht in jedem Fall geeignet ist, Fertigungstoleranzen senkrecht zur Anschraubfläche der Träger auszugleichen, so dass es teilweise zu Beeinträchtigungen des Erscheinungsbildes durch sichtbare Trennlinien bzw. Schlitze zwischen dem Grundkörper und der Abdeckkappe kommen kann.

Der Erfindung liegt daher die **Aufgabe** zu Grunde, eine Dachreling für Fahrzeuge mit einem von Stützfüßen getragenen Längsholm vorzuschlagen, die sich von außen auf dem Fahrzeugdach montieren lässt und deren Längsholme und Stützfüße ein einheitliches Erscheinungsbild hinsichtlich der Oberflächenqualität und deren Aussehen gewährleisten.

Als **Lösung** dieser Aufgabenstellung wird eine Dachreling für Fahrzeuge mit den Merkmalen des Anspruchs 1 vorgeschlagen.

Da die Längsholme und die Kappe aus dem gleichen Material bestehen, lassen sich deren Oberflächen in gleicher Weise durch Pulverbeschichtung, Eloxieren oder Verchromen behandeln und ergeben eine einheitliche Oberflächenqualität und ein einheitliches Oberflächenaussehen. Des Weiteren lässt sich der Umgriff der Kappe auf dem Träger bzw. dem Einsatz so gestalten, dass störende Trennlinien im nicht direkt sichtbaren Bereich liegen. Vorteilhaft ist ferner, dass sich die Kappe mit hoher Form- und Wiederholgenauigkeit mit gleichmäßigen Wanddicken herstellen lässt. Die Klebeelemente können eine solche Dicke und Elastizität haben, dass die Kappe stramm gegen den Einsatz gehalten wird und dadurch Toleranzen senkrecht zur Anschraubfläche aufgefangen werden.

Wenn die Längsholme und die Kappen aus der gleichen eloxierbaren Leichtmetalllegierung bestehen, lassen sie sich gleichzeitig und in derselben Eloxieranlage oberflächenveredeln, so dass jede Charge ein identisches Oberflächenfinish aufweist.

Der Grundkörper wird mit den in die Zapfen eingesteckten Längsholmen von außen mit dem Dach verschraubt, wonach auf jeden Stützfuß ein Einsatz aufgeklipst wird. Mit diesem Einsatz wird die Kappe dann mittels der Klebeelemente so verklebt, dass sie spaltfrei am Längsholm anliegt und mit diesem ein einheitliches Erscheinungsbild ergibt.

Für die Verbindung zwischen dem Grundkörper und dem Einsatz können im Bereich des Zapfens und seitlich im Bereich seiner Anschraubfläche Taschen mit Hinterschneidungen und /oder Aufnahmen für Klipsnasen und/oder Hakennasen am Einsatz vorgesehen sein.

Sowohl der Grundkörper als auch der Einsatz können als Kunststoffspritzgussteile hergestellt sein, jedoch kann es bei Dachrelings, die für größere Dachlasten bestimmt sind, vorteilhaft sein, wenigstens den Grundkörper aus Metall herzustellen.

Um die Kappe zu unterstützen und zu halten, kann der Einsatz fachwerkartig gewölbt mit mehreren, der Innenkontur der Kappe angepassten Gurten ausgebildet sein, wobei die Klebeelemente in Vertiefungen der Gurte angeordnet sind. Diese Klebeelemente können vorzugsweise aus doppelseitig klebenden Schaumstoffbändern bestehen, die so dick und so elastisch sind, dass beim Aufkleben der Kappen Toleranzen senkrecht zum Dach aufgefangen werden und die den Einsatz haltenden Klipsnasen und/oder Hakennasen immer unter Vorspannung stehen.

Aus Gründen der Gewichtsersparnis können der Grundkörper und der Einsatz in Skelettbauweise ausgebildet sein, indem der Einsatz, wie bereits erwähnt, fachwerkartig ausgebildet wird und von der Anschraubfläche und einer zum Zapfen führenden, die Kappe in diesem Bereich zum Dach hin abschließenden Abschlussfläche des Grundkörpers senkrechte, den Einsatz abstützende Versteifungsrippen abstehen.

Die Erfindung wird nachstehend anhand eines in der Zeichnung dargestellten Ausführungsbeispiels des Näheren erläutert. In der Zeichnung zeigen:

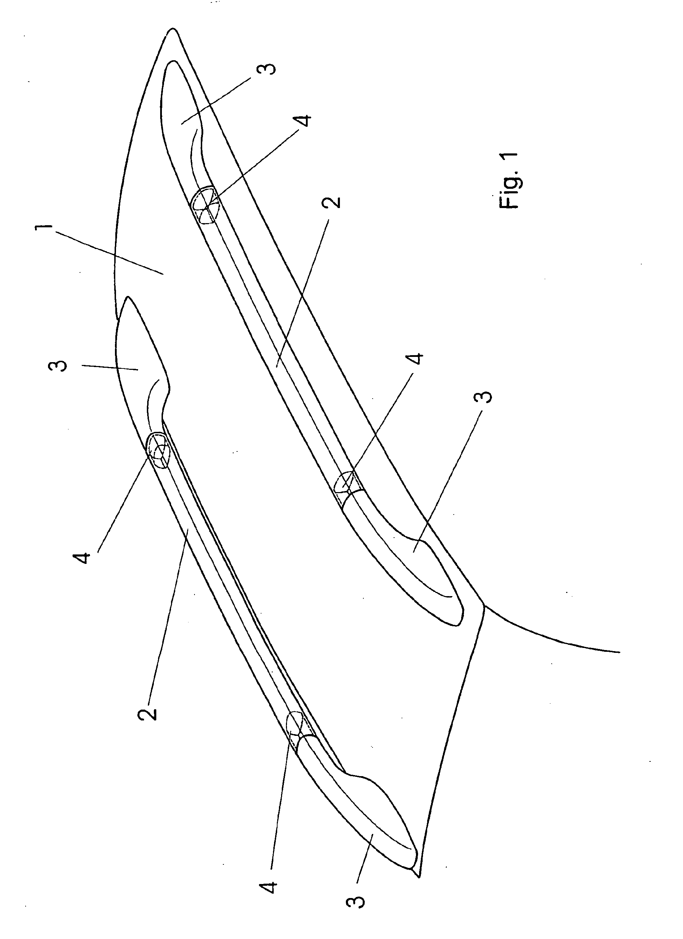

- Fig. 1: eine perspektivische Darstellung, einer auf einem Fahrzeugdach angeordneten Dachreling,
- Fig. 2: eine Explosionsdarstellung der Stützfüße für die Dachreling gemäß Fig. 1,
- Fig. 3: einen Querschnitt durch einen Stützfuß im fertig montierten Zustand und
- Fig. 4: einen Querschnitt durch ein Werkzeug zum Herstellen der Kappen mittels der Innenhochdruckumformtechnik (IHU).

Von einem Kraftfahrzeug ist nur schematisch ein Fahrzeugdach 1 dargestellt, auf dem eine Dachreling aus zwei parallelen, rohrförmigen Längsholmen 2 und Stützfüßen 3, deren Zapfen 4 in die Enden der Längsholme 2 eingesteckt sind, befestigt sind.

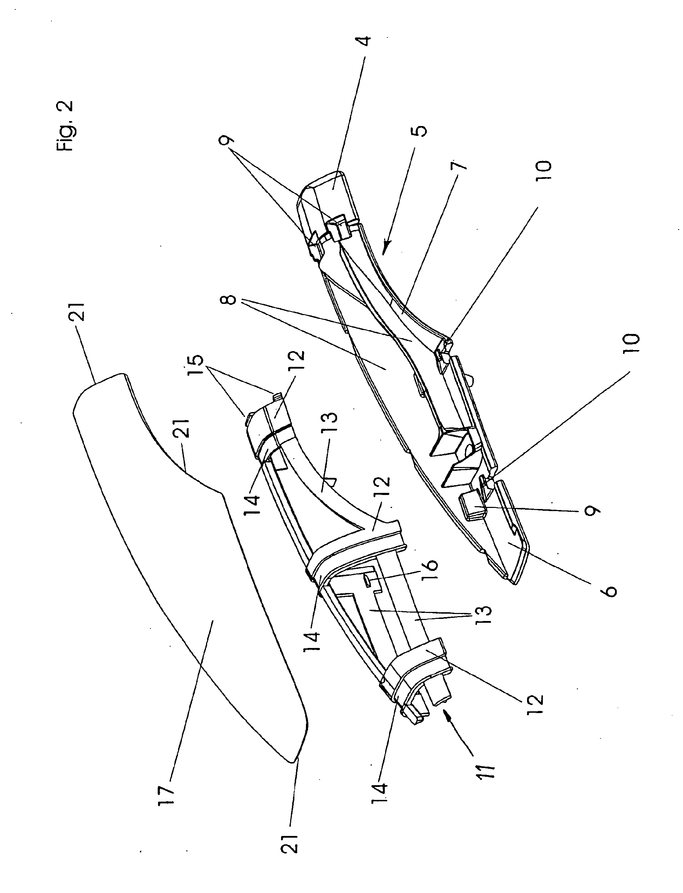

Aus der Explosionsdarstellung in Fig. 2 sind Einzelheiten der Stützfüße 3 erkennbar. Jeder Stützfuß 3 besteht aus einem Grundkörper 5, dessen Anschraubfläche 6 mit dem Fahrzeugdach 1 von außen verschraubt wird. Dies geschieht, nachdem an jedes Ende eines Längsholms 2 ein Grundkörper 5 mittels seiner Zapfen 4 angesteckt wurde.

Die Anschraubfläche 6 des Grundkörpers 5 geht in eine gebogene Abschlussfläche 7 über, die im Bereich des Zapfens 4 endet. Senkrecht zur Anschraubfläche 6 und zur Abschlussfläche 7 erstrecken sich Versteifungsrippen 8. Im Bereich des Zapfens 4 sind Taschen 9 mit Hinterschneidungen zur Aufnahme von Hakennasen 15 an einem Einsatz 11 vorgesehen. Des Weiteren sind seitliche Taschen 9 im Bereich der Anschraubfläche 6 und einer Versteifungsrippe 8 sowie Aufnahmen 10 an der Anschraubfläche 6 vorgesehen.

Mit dem Grundkörper 5 lässt sich ein Einsatz 11 verbinden, insbesondere durch Verklipsen. Der Einsatz 11 ist fachwerkartig gestaltet und weist gewölbte Gurte 12 auf, die eine Kontur aufweisen, die der Innenkontur einer Kappe 17 entsprechen, und die durch Verbinder 13 den Einsatz 11 ergeben. In den Gurten 12 sind Vertiefungen 14 vorgesehen, in die sich nicht dargestellte, doppelseitige Schaumstoffklebebänder einlegen lassen.

Nachdem der Einsatz 11 mittels seiner Hakennasen 15 in die Taschen 9 am Grundkörper 5 eingeführt ist, lässt er sich auf die Anschraubfläche 6 hinunterklappen, so dass die Klipsnasen 16 in die Taschen 9 bzw. die Aufnahmen 10 einklipsen und dort gehalten werden.

Danach lässt sich die Kappe 17 auf den Einsatz 11 aufsetzen und schließt dabei spaltfrei mit dem Ende des Längsholms 2 ab.

Die in den Vertiefungen 14 angeordneten Schaumstoffklebebänder weisen eine solche Dicke auf und sind so elastisch, dass die Kappe 17 stramm gegen den Einsatz 11 gehalten wird und dadurch Toleranzen senkrecht zur Anschraubfläche 6 aufgefangen und die Klipsnasen 16 sowie die Hakennasen 15 stets unter Vorspannung gehalten werden.

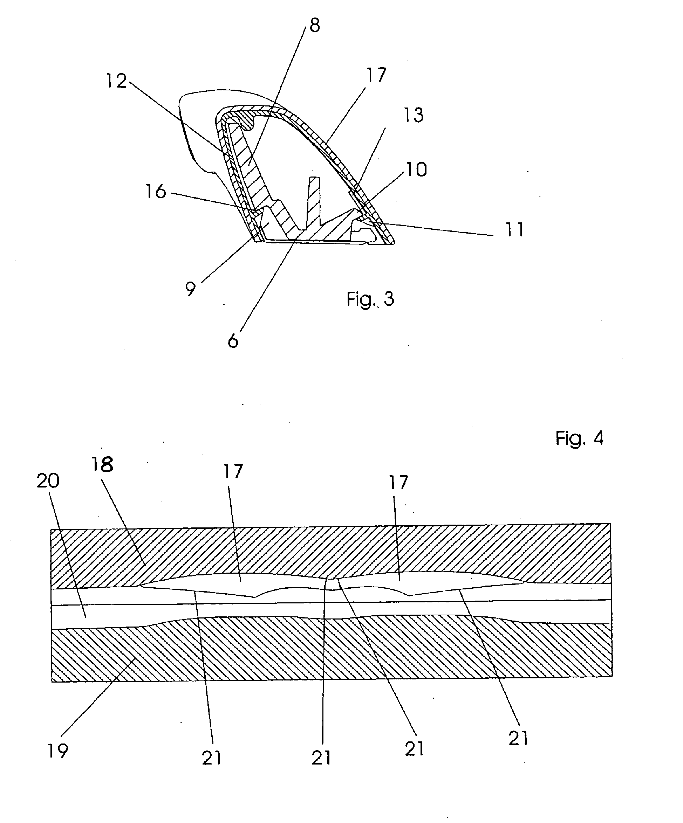

Zum Herstellen der Kappe 17 mittels der Innenhochdruckumformtechnik (IHU) wird ein in Fig. 4 dargestelltes Werkzeug aus den Werkzeughälften 18, 19 verwendet. Diese Werkzeughälften 18, 19 bilden einen profilierten Hohlraum 20, in die ein umzuformendes Rohr, das gegebenenfalls vorgebogen sein kann, eingelegt wird. Das Werkzeug 18, 19 wird dann seitlich verschlossen und abgedichtet, wonach das Rohrinnere mit einer Hochdruckflüssigkeit beaufschlagt wird und die Kontur des profilierten Hohlraums 20 annimmt. Auf diese Weise lassen sich die Kappen 17 in der Rohroberfläche ausformen und müssen nur noch längs der Trennlinien 21 vom Rohr durch beispielsweise Laserschnitt oder Fräsen abgetrennt werden. Die Kappen 17 lassen sich mit diesem Verfahren mit hoher Form- und Wiederholgenauigkeit mit gleichmäßigen Wanddicken herstellen, und das Material der Kappen wird gleich mit dem der Längsholme 2 gewählt, so dass sie der gleichen Oberflächenbehandlung unterzogen werden können und dieselbe Oberflächenqualität und dasselbe Oberflächenaussehen erhalten, insbesondere, wenn das Material der Längsholme und der Kappen aus einer eloxierbaren Aluminiumlegierung besteht.

## Patentansprüche

1. Dachreling für Fahrzeuge, bestehend aus zwei, sich in einem Abstand und im Wesentlichen parallel zur Dachfläche längs der seitlichen Dachrahmen erstreckenden, rohrförmigen Längsholmen (2) und aus die Längsholme (2) tragenden, sich jeweils auf dem Dach (1) oder darin ausgebildeten Kanälen abstützenden Stützfüßen (3) aus einem mit dem Dach (1) verschraubbaren Träger (5, 11) mit einem in die Enden der Längsholme (2) einsteckbaren Zapfen (4) und einer aus dem gleichen Material wie die Längsholme bestehenden, den Träger (5, 11) übergreifenden und daran befestigten Kappe (17), die mittels der Innenhochdruckumformtechnik (IHU) hergestellt ist,
**dadurch gekennzeichnet,**
**dass** der Träger (5, 11) von außen mit dem Dach (1) verschraubbar ist und aus einem mit dem Dach (1) oder darin ausgebildeten Kanälen verschraubten Grundkörper (5) mit dem in die Enden der Längsholme (2) einsteckbaren Zapfen (4), und einem mit dem Grundkörper (5) verbindbaren Einsatz (11) besteht, und dass der Einsatz (11) mit der Innenkontur der Kappe (17) wenigstens bereichsweise übereinstimmt und in diesen Bereichen Klebeelemente aufweist.

2. Dachreling nach Anspruch 1, bei der die Längsholme (2) und die Kappen (17) aus der gleichen eloxierbaren Leichtmetalllegierung bestehen.

3. Dachreling nach Anspruch 1 oder 2, bei der die Kappe (17) mit dem Träger (5, 11) verklebt ist.

4. Dachreling nach Anspruch 3, bei der die Kappe (17) mit dem Träger (5, 11) mittels doppelseitigen Klebebändern verklebt ist.

5. Dachreling nach Anspruch 1, bei der der Grundkörper (5) im Bereich des Zapfens (4) und seitlich im Bereich seiner Anschraubfläche (6) Taschen (9) mit Hinterschneidungen und/oder Aufnahmen (10) für Klipsnasen (16) und/oder Hakennasen (15) am Einsatz (11) aufweist.

6. Dachreling nach Anspruch 1 oder 5, bei der der Einsatz (11) fachwerkartig gewölbt mit mehreren, der Innenkontur der Kappe (17) angepassten Gurten (12) ausgebildet ist, und die Klebelemente in Vertiefungen der Gurte (12) angeordnet sind.

7. Dachreling nach Anspruch 5 oder 6, bei der von der Anschraubfläche (6) und einer zum Zapfen (4) führenden, die Kappe in diesem Bereich zum Dach (1) hin abschließenden Abschlussfläche (7) des Grundkörpers (5) senkrechte, den Einsatz (11) abstützende Versteifungsrippen (8) abstehen.

8. Dachreling nach einem der Ansprüche 4 bis 7, bei der die Klebeelemente aus doppelseitig klebenden Schaumstoffbändern bestehen.

9. Dachreling nach einem der vorhergehenden Ansprüche, **dadurch gekennzeichnet, dass** der Einsatz (11) durch Verklipsen mit dem Grundkörper (5) verbunden ist.

## Claims

1. Roof rack for vehicles, consisting of two tubular longitudinal rods (2) extending at a distance from and essentially parallel to the roof surface along the lateral roof frames, and of supporting feet (3) which carry the longitudinal rods (5) and which are respectively supported on the roof (1) or channels formed therein, which supporting feet consist of a carrier (5, 11) which can be screwed to the roof (1) and which has a stud (4) that can be inserted into the ends of the longitudinal rods (2), and of a cap (17) which is made from the same material as the longitudinal rods and which engages over the carrier (5, 11) and is fixed thereto, said cap being produced by means of the internal high-pressure forming (IHPF) technique, **characterised in that** the carrier (5, 11) can be screwed to the roof (1) from outside and consists of a base body (5) which can be screwed to the roof (1) or channels formed therein and which comprises the stud (4) that can be inserted into the ends of the longitudinal rods (2), and of an insert (11) which can be connected to the base body (5), and **in that** the insert (11) matches the inner contour of the cap (17) at least in some regions and has adhesive elements in these regions.

2. Roof rack according to claim 1, in which the longitudinal rods (2) and the caps (17) are made from the same anodisable light metal alloy.

3. Roof rack according to claim 1 or 2, in which the cap (17) is adhesively bonded to the carrier (5, 11).

4. Roof rack according to claim 3, in which the cap (17) is adhesively bonded to the carrier (5, 11) by means of double-sided adhesive strips.

5. Roof rack according to claim 1, in which the base body (5) has, in the region of the stud (4) and laterally in the region of its screw-attachment surface (6), pockets (9) with undercuts and/or openings (10) for clip-in protrusions (16) and/or hook-in protrusions (15) on the insert (11).

6. Roof rack according to claim 1 or 5, in which the insert (11) is formed in the manner of a framework in a curved shape with a plurality of webs (12) adapted to the inner contour of the cap (17), and the adhesive elements are arranged in depressions of the webs (12).

7. Roof rack according to claim 5 or 6, in which perpendicular stiffening ribs (8) which support the insert (11) protrude from the screw-attachment surface (6) and from a closure surface (7) of the base body (5) which leads to the stud (4) and which closes off the cap in this region with respect to the roof (1).

8. Roof rack according to one of claims 4 to 7, in which the adhesive elements consist of double-sided adhesive foam strips.

9. Roof rack according to one of the preceding claims, **characterised in that** the insert (11) is connected to the base body (5) by clip-fastening.

## Revendications

1. Galerie de toit pour véhicule, constituée de deux longerons tubulaires (2) s'étendant avec un intervalle parallèlement à la surface du toit le long des cadres de toit latéraux et de pieds de support (3) porteurs à partir des longerons (2), s'appuyant chacun sur le toit (1) ou dans des canaux formés dans celui-ci constitués d'un support (5, 11) pouvant être vissé sur le toit et pourvu d'un tenon (4) pouvant être enfilé dans les extrémités du longeron (2) et d'un cache (17), du même matériau que les longerons, surmontant le support (5, 11) et fixé sur lui, qui est fabriqué par la technique de formage par pression intérieure (IHU),
**caractérisé en ce que,**
le support (5, 11) peut être vissé sur le toit (1) depuis l'extérieur et est constitué d'un corps de base (5) vissé au toit (1) ou dans des canaux formés dans celui-ci et pourvu du tenon (4) pouvant être enfoncé dans les extrémités des longerons et d'une garniture (11) pouvant être reliée au corps de base (5) et **en ce que** la garniture (11) concorde partiellement, au moins par endroits, avec le contour intérieur du cache (17) et présente dans ces endroits des éléments de collage.

2. Galerie de toit selon la revendication 1, dans laquelle les longerons (2) et les caches (17) sont constitués du même alliage de métal léger anodisable.

3. Galerie de toit selon la revendication 1 ou 2, dans laquelle le cache (17) est collé au support (5, 11).

4. Galerie de toit selon la revendication 3, dans laquelle le cache (17) est collé au support (5, 11) au moyen de rubans adhésifs double face.

5. Galerie de toit selon la revendication 1, dans laquelle le corps de base (5) présente dans la zone du tenon (4) et latéralement dans la zone de sa surface de vissage (6), des poches (9) pourvues de contre dépouilles et/ou de logements (10) pour des becs de clipsage (16) et/ou des crochet (15) sur la garniture (11).

6. Galerie de toit selon la revendication 1 ou 5, dans laquelle la garniture (11) est configurée bombée comme une chambre de roulement avec plusieurs ceintures (12) adaptées au contour interne du cache (17) et les éléments collants sont disposés dans des creux de la ceinture.

7. Galerie de toit selon la revendication 5 ou 6, dans laquelle des nervures de raidissement (8) verticales soutenant la garniture font saillie à partir de la surface de vissage (6) et d'une surface terminale (7) du corps de base (5) menant au tenon (4) et fermant le cache dans cette zone vers le toit (1).

8. Galerie de toit selon la revendication 4 ou 7, dans laquelle les éléments collants sont constitués de bandes de mousse collant sur leurs deux faces.

9. Galerie de toit selon l'une des revendications précédentes, **caractérisé en ce que** la garniture (11) est reliée par clipsage au corps de base (5).
